**Europäisches Patentamt**

**European Patent Office**

**Office européen des brevets**

(19)

(11) Veröffentlichungsnummer: **0 291 756 B1**

(12) # EUROPÄISCHE PATENTSCHRIFT

(45) Veröffentlichungstag der Patentschrift: **11.11.92**

(51) Int. Cl.5: **B30B 5/06**

(21) Anmeldenummer: **88107046.0**

(22) Anmeldetag: **03.05.88**

---

(54) **Doppelbandpresse zur kontinuierlichen Herstellung von endlosen Werkstoffbahnen.**

---

(30) Priorität: **22.05.87 DE 3717308**

(43) Veröffentlichungstag der Anmeldung:
**23.11.88 Patentblatt 88/47**

(45) Bekanntmachung des Hinweises auf die
Patenterteilung:
**11.11.92 Patentblatt 92/46**

(84) Benannte Vertragsstaaten:
**FR GB IT SE**

(56) Entgegenhaltungen:
**EP-A- 0 140 117**
**EP-A- 0 163 864**
**FR-A- 1 281 879**
**US-A- 4 125 760**

**DERWENT ABSTRACT No. 89-252749(35); &**
**JP-A-01 184 105 (TOA NENRYO KOGYO K.K.)**
**21-07-1989**

(73) Patentinhaber: **Held, Kurt**
**Alte Strasse 1**
**W-7218 Trossingen 2(DE)**

(72) Erfinder: **Held, Kurt**
**Alte Strasse 1**
**W-7218 Trossingen 2(DE)**

Rank Xerox (UK) Business Services

## Beschreibung

Die Erfindung betrifft eine Doppelbandpresse zur kontinuierlichen Herstellung von endlosen Werkstoffbahnen gemäß dem Oberbegriff des Patentanspruchs 1.

Doppelbandpressen dieser Art (DE-OS 24 21 296) dienen insbesondere der Herstellung von dekorativen Schichtstofflaminaten, Spanplatten, Faserplatten, Sperrholzplatten, kupferkaschierten Elektrolaminaten, dem Ausgangsmaterial für Leiterplatten, Thermoplastbahnen und anderen laminierten Werkstoffen. Zur Erzielung einer guten Qualität des Endprodukts ist es erforderlich, während des Durchlaufs des Preßgutes durch die Doppelbandpresse das im Preßgut enthaltene Bindemittel (Kunstharz) unter Druck auszuhärten und gleichzeitig die hierfür benötigte Wärmemenge auf das Preßgut zu übertragen. Da die beheizten Preßbänder nur eine bestimmte Wärmekapazität besitzen, ist die maximal auf das Preßgut zu übertragende Wärmemenge beschränkt und reicht für viele Anwendungsfälle nicht aus. Die Zuführung zusätzlicher Wärme über die Heiz- oder Druckplatten und das fluide Druckmittel findet an der schlechten Wärmeleitfähigkeit fluider Medien ihre Grenze.

Zwar ist es bekannt, das Preßgut bereits vor Einlauf in die Doppelbandpresse vorzuheizen, beispielsweise durch Infrarotstrahlung. Jedoch kann dies zu einer unerwünschten Vorkondensation des im Preßgut enthaltenen Harzes führen, so daß ein Fertigprodukt minderer Qualität entsteht. Weiterhin sind die Energiekosten bei dieser Art der Wärmeübertragung unwirtschaftlich hoch und man kann durch diese Maßnahme kein vorbestimmtes Temperaturgefälle im Preßgut während der Pressung erzeugen, wie es in manchen Anwendungsfällen vorteilhaft ist.

Aus der DE-OS 33 25 578 ist es zur Zuführung von Wärme in der Reaktionszone einer Doppelbandpresse bekannt, im Druckkissen der Doppelbandpresse Elemente aus gut wärmeleitfähigem Material anzuordnen, die einerseits mit den Heizoder Druckplatten mit gutem Wärmeleitkontakt verbunden sind und andererseits die Bandinnenseite der Preßbänder schleifend berühren. Nachteilig ist hier jedoch, daß zur Erreichung eines guten Wärmeleitkontakts diese Elemente mit einer bestimmten Kraft an die Bandinnenseiten angepreßt werden müssen, wodurch die auf das Preßband ausgeübten Zugkräfte ansteigen. Um die in der Praxis benötigten Wärmemengen übertragen zu können, ist die Anordnung einer großen Zahl von solchen wärmeleitenden Elementen notwendig, so daß dadurch die höchstzulässigen Bandspannungen im Preßband überschritten werden können. Zudem besteht die Gefahr der Zerstörung der Oberflächen der Preßbänder durch die zwischen den Bandinnenseiten und den daran angepreßten wärmeleitenden Elementen auftretenden Reibkräfte, die bei der schleifenden Bewegung der Preßbänder an den wärmeleitenden Elementen entstehen.

Es ist Aufgabe der Erfindung, in einer gattungsgemäßen Doppelbandpresse den Wärmetransport zum Preßgut im Bereich des Druckkissens so zu verbessern, daß praktisch keine zusätzlichen Reibkräfte auf den Preßbandoberflächen auftreten und die maximal zulässigen Zugspannungen im Preßband beim Betrieb der Doppelbandpresse nicht überschritten werden.

Die Lösung dieser Aufgabe wird durch die im Kennzeichen der Patentansprüche 1, 17 beschriebene technische Lehre vermittelt.

Die mit der Erfindung erzielbaren Vorteile bestehen insbesondere darin, daß die Wärme in der Reaktionszone der Doppelbandpresse praktisch berührungslos übertragen wird. Dadurch werden keine zusätzlichen Zugkräfte für die Bewegung der Preßbänder notwendig.

Weiter entfallen die zerstörerischen Reibkräfte, so daß die Lebensdauer der teuren Preßbänder verlängert wird und die zum Betrieb der Doppelbandpresse nötige Energie verringert wird. Vorteilhafterweise läßt sich an einer erfindungsgemäßen Doppelbandpresse in der durch das Druckkissen begrenzten Reaktionszone ein vorbestimmtes Temperaturprofil oder Temperaturgefälle einstellen.

Die nachstehende Beschreibung bevorzugter Ausführungsformen der Erfindung dient im Zusammenhang mit beiliegenden Zeichnungen der weiteren Erläuterung. Es zeigen:

Fig. 1     eine schematische Ansicht einer Doppelbandpresse,

Fig. 2     einen Schnitt in Längsrichtung durch den Einlaufbereich einer Doppelbandpresse,

Fig. 3     eine Druckplatte von der Preßbandrückseite aus gesehen,

Fig. 4     den Schleifringübertrager zur Übertragung des Stromes auf das Preßband,

Fig. 5     die elektrische Prinzipschaltung für die Widerstandserwärmung eines Preßbandes und

Fig. 6     eine schematische Schnittansicht einer Preßbandeinheit mit der elektrischen Prinzipschaltung für die induktive Erwärmung eines Preßbandes.

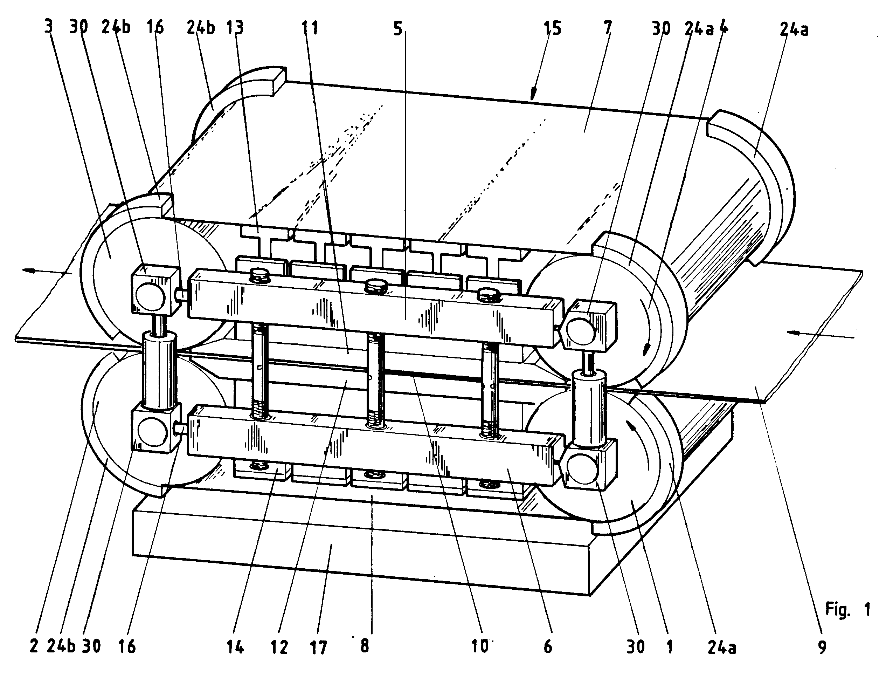

Die in Fig. 1 schematisch dargestellte Doppelbandpresse 15 zur kontinuierlichen Herstellung von Werkstoffbahnen 9 besitzt vier in Lagerbrücken 5, 6 drehbar gelagerte Umlenktrommeln 1, 2, 3, 4. Um jeweils zwei dieser Umlenktrommeln 1, 2, und 3, 4 ist ein Preßband 7, 8 herumgeführt, das gewöhnlicherweise aus einem hochzugfesten Stahlband besteht. Die Preßbänder 7, 8 werden mit bekannten Mitteln, beispielsweise Hydraulikzylindern 16 gespannt. Die Umlenktrommeln 2, 3 werden (in an sich bekannter und deshalb nicht dargestellter Weise) angetrieben und ziehen dabei die Preßbänder 7 und 8 durch die Doppelbandpresse 15 hindurch, so daß sich deren Außenseiten im Mittelbereich der Doppelbandpresse 15 einander gegenüberliegen, mit gleicher Geschwindigkeit parallel zueinander horizontal bewegen und dort die Reaktionszone 10 bilden. Die Umlaufrichtung ist durch Pfeile in den Umlenktrommeln 1 und 4 angegeben. Zwischen diesen Preßbändern 7, 8 wird in der Reaktionszone 10 eine in der Zeichnung von rechts nach links vorlaufende Werkstoffbahn 9, die aus mit Kunstharz getränkten Schichtstoffen, Faser-Bindemittelgemischen oder dergleichen bestehen kann, unter gleichzeitiger Anwendung von Wärme und Druck verdichtet. Sollte das Preßgut eine entsprechende Behandlung erfordern, so kann das Preßgut anschließend noch unter Druck abgekühlt werden.

Der auf die Werkstoffbahn 9 ausgeübte Druck wird über Druckplatten 11, 12 hydraulisch auf die Innenseiten der Preßbänder 7, 8 aufgebracht und von dort auf die Werkstoffbahn 9 übertragen. Die vom Preßgut ausgeübten Reaktionskräfte werden über die Druckkammern 11, 12 und von mit diesen verbundenen Stützträgern 13, 14 in das nur schematisch angedeutete Pressengestell übertragen. Das Pressengestell wiederum ist über senkrechte, an der Rückseite der Doppelbandpresse 15 befindliche Ständer mit der Bodenplatte 17 verbunden.

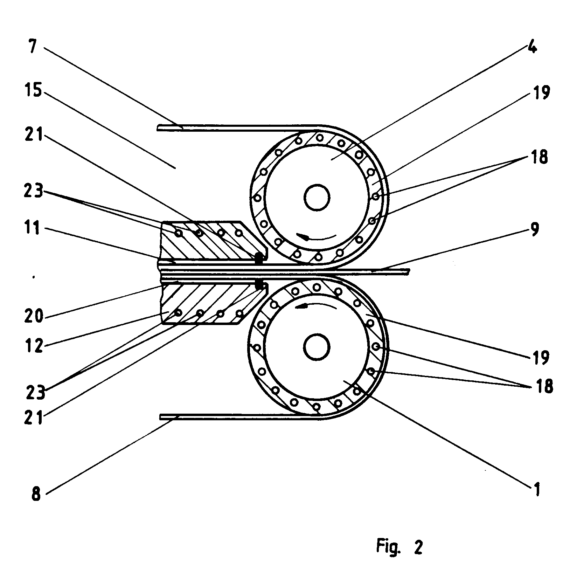

Die einlaufseitigen Umlenktrommeln 1, 4 sind beheizt, beispielsweise mit Hilfe von Thermoöl, welches in Kanälen 18 im Mantel 19 der Umlenktrommeln 1, 4 zirkuliert (siehe Fig. 2), und erwärmen dadurch die Preßbänder 7 und 8. Die von diesen aufgenommene Wärmemenge wird durch deren Wärmekapazität in die Reaktionszone 10 transportiert und dort an die Werkstoffbahn 9 abgegeben, wo sie zum Aushärten des Preßgutes dient.

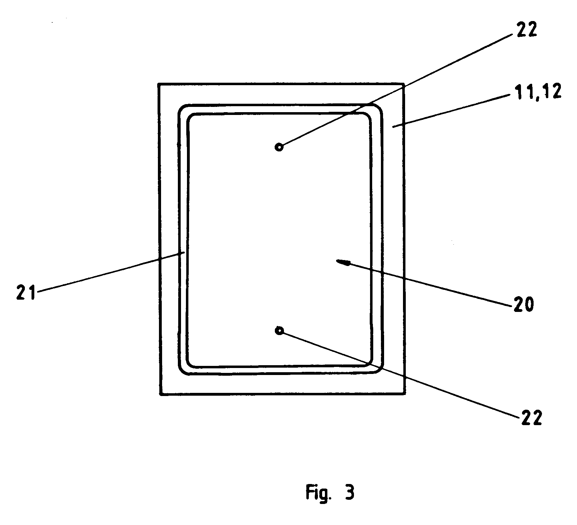

Zur Erzeugung des auf die Werkstoffbahn 9 wirkenden Flächendrucks wird ein unter Druck setzbares fluides Druckmedium in den Raum zwischen der Druckplatte 11, 12 und der Innenseite des Preßbandtrums 7, 8 gebracht. Zu den Seiten ist dieser Raum, die sogenannte Druckkammer 20, mit ringförmig in sich geschlossenen Dichtungen 21 begrenzt. Diese Dichtungen 21 sind in der Druckplatte 11, 12 gelagert und berühren unter einem Anpreßdruck mit einer Fläche die Innenseiten der Preßbänder 7, 8 schleifend. Somit wirken die Dichtungen 21 als Gleitflächendichtung. In Fig. 3 wird eine solche Druckkammer 20 von der Preßbandrückseite aus gesehen in Draufsicht gezeigt. Die Druckplatte 11, 12 besteht aus einer Stahlplatte und besitzt eine rechteckige Gestalt. Im Randbereich rings um ihren Umfang entlang ist eine Nut eingelassen, in der sich die Dichtung 21 zur Begrenzung nach den Seiten befindet. In der Druckplatte 11, 12 sind je nach Größe ein oder mehrere Einläße 22 vorgesehen, durch die das Druckmedium in die Druckkammer 20 eingebracht wird. Als Druckmedium wird ein synthetisches Öl verwendet, das den in der Doppelbandpresse herrschenden Betriebsbedingungen standhält. Genausogut kann aber auch ein Gas, beispielsweise Druckluft verwendet werden. Zur Beheizung kann die Druckplatte 11, 12 mit Quer- oder Längsbohrungen 23 (siehe Fig. 2) versehen sein, durch die erwärmbares Thermoöl zirkuliert.

Bei manchen zu verpressenden Materialien reicht die von den Preßbändern 7, 8 an den Umlenktrommeln 1, 4 aufgenommene und in der Reaktionszone 10 an die Werkstoffbahn 9 abgegebene Wärmemenge nicht zur vollständigen Aushärtung des Preßgutes aus. Da das erwähnte fluide Druckmittel ein schlechter Wärmeleiter ist, ist es jedoch schwierig, Wärme in ausreichender Menge von den Druckplatten 11, 12 auf die Preßbänder 7, 8 zu übertragen. Um diese Schwierigkeit zu beheben, werden die Preßbänder 7, 8 in der Doppelbandpresse 15 zusätzlich durch Widerstandserwärmung oder induktive Erwärmung mittels Wirbelstromverluste aufgeheizt. Es wurde gefunden, daß sich hierdurch eine erheblich bessere Wärmeübertragung von den Preßbändern 7, 8 auf die die Reaktionszone 10 durchlaufende Werkstoffbahn 9 erzielen läßt.

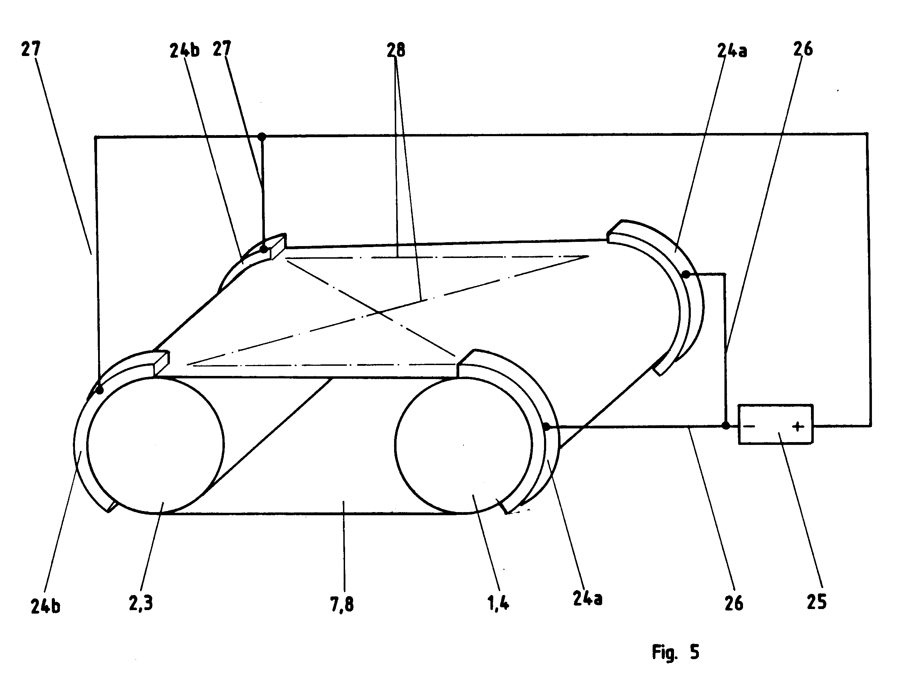

Wie aus Fig. 1 hervorgeht, sind zur elektrischen Widerstandserwärmung der Preßbänder 7, 8 in der Doppelbandpresse 15 links und rechts an den Umlenktrommeln 1, 2, 3, 4 Schleifringübertrager 24a, b angebracht, über die eine elektrische Gleichspannung an die Preßbänder 7, 8 angelegt wird. Das Prinzip für die elektrische Schaltung ist in Fig. 5 an einer Preßbandeinheit näher gezeigt. Der Minuspol einer Gleichspannungsquelle 25 wird mittels Leitungen 26 mit den in der Zeichnung rechts liegenden Schleifringübertragern 24a, die sich an den Umlenktrommeln 1 bzw. 4 befinden, verbunden. Der Pluspol der Gleichspannungquelle 25 wird über die Leitungen 27 mit den in der Zeichnung links liegenden Schleifringübertragern 24b, die sich an den Umlenktrommeln 2 bzw. 3 befinden, verbunden. Dadurch fließt ein Strom von den Schleifringübertragern 24b zu den Schleifringübertragern 24a über das Preßband 7, 8. Die prinzipiellen Stromwege sind in Fig. 5 mit dem Bezugszeichen 28 bezeichnet. Aufgrund des spezifischen Widerstandes des Preßbandes 7, 8 entsteht über dem Preßband ein Spannungsabfall, der zu einer Erwärmung des Preßbandes 7, 8 führt. Da die üblicherweise für Preßbänder verwendeten Edelstähle Materialien mit relativ hohem spezifischen Widerstand darstellen, wird so eine beträchtliche Wärmemenge erzeugt. Diese Wärmemenge und damit die Temperaturerhöhung des Preßbandes kann durch die Wahl der angelegten Spannung und des fließenden Stromes der Gleichspannungsquelle 25 gezielt gesteuert werden.

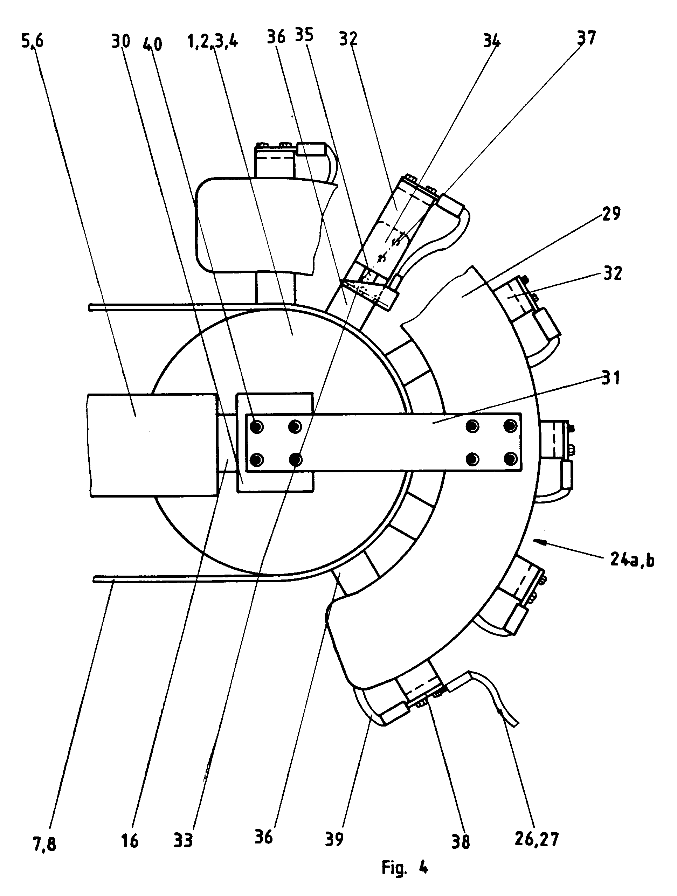

Die nähere Ausbildung des Schleifringübertragers 24a, b ist in Fig. 4 gezeigt. Der Schleifringübertrager 24a, b besteht aus einer bogenförmigen Gestellplatte 29, deren Radius etwas größer als derjenige der Umlenktrommlen 1, 2, 3, 4 ist. Die nicht ganz halbkreisförmige, etwa einen Kreisausschnitt von 150° bildende Gestellplatte 29 ist mit einem Träger 31 an den Halterungen 30 für die Umlenktrommeln 1, 2, 3, 4 ortsfest so befestigt, daß sie das Preßband 7, 8 nicht berührt. An der Gestellplatte 29 sind längliche Bürstenhalterungen 32 in zweckmäßigen Abstand voneinander befestigt. Zur Verdeutlichung der Ausbildung einer solchen Bürstenhalterung 32 ist die Gestellplatte 29 in Fig. 5 an einer Stelle durchbrochen gezeichnet. In den Bürstenhalterungen 32 befinden sich Einsätze 34, die der Aufnahme einer Bürstenfassung 33 dienen. Die Bürstenfassung 33 ist über ein Gestänge 35 gegenüber dem Einsatz 34 verschiebbar. In der Bürstenfassung 33 ist die eigentliche, das Pressband 7, 8 schleifend berührende Bürste 36 befestigt. Die Bürstenhalterung 32 ist drehbar um einen Schwenkpunkt 37 an der Gestellplatte 29 und wird zusammen mit der verschiebbaren Bürstenfassung 33 so eingestellt, daß die Bürste 36 das Preßband 7, 8 optimal berührt.

An dem dem Preßband 7, 8 abgewandten Ende der Bürstenhalterung 32 ist eine Kupferplatte 38 angebracht, auf die die Leitungen 26, 27 von der Gleichspannungsquelle 25 führen. Von der Kupferplatte 38 gehen weitere Kupferleitungen 39 zur Bürstenfassung 33 ab. Damit ist die Bürste 36 mit dem entsprechenden Pol der Gleichspannungsquelle 25 kontaktiert und überträgt so die Spannung auf das Preßband 7, 8. Die Anzahl der Bürsten richtet sich nach der Größe des zu übertragenden Stromes. Als Material für die Bürste eignet sich beispielsweise Graphit, Bronze, Kupfer oder dergleichen. Selbstverständlich können die Bürsten 36 nicht nur am Rande des Preßbandes 7, 8 angebracht sein, sondern über die gesamte Breite des Preßbandes in zweckmäßigem Abstand verteilt sein.

Um ein ungewolltes Übertragen des elektrischen Stroms aus das Maschinengestell zu vermeiden, ist zwischen dem Träger 31 und der Halterung 30 eine isolierende Platte unterlegt (in der Zeichnung nicht gezeigt). Ebenso werden die Befestigungsschrauben 40 mit Isolierscheiben unterlegt. Die Umlenktrommeln 1, 2, 3, 4 können zur Isolierung gegenüber dem Preßband 7, 8 gummiert sein.

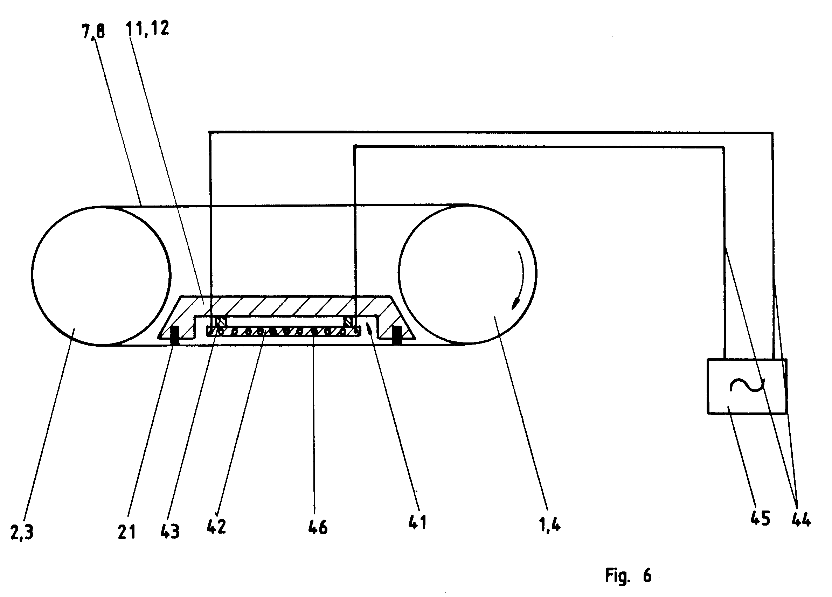

In einer weiteren Ausführungsform ist das Prinzip der induktiven Erwärmung mittels Wirbelstromverluste an einer Preßbandeinheit der Doppelbandpresse 15 in Fig. 6 gezeigt. Die Druckplatte 11, 12 besitzt eine rechteckige Ausnehmung 41 zur Aufnahme des Induktors 42. Der Induktor 42 besteht aus einer rechteckigen Kupferplatte und ist mittels Halterungen 43 isoliert an der Druckplatte 11, 12 befestigt. Durch die Druckplatte 11, 12 gehen Leitungen 44 zu dem Induktor 42. Diese Leitungen 44 sind mit den Polen einer Wechselspannungsquelle 45 verbunden. Zur Kühlung können im Induktor 42 Bohrungen 46 vorhanden sein, die von Kühlwasser durchflossen werden.

Die Spannungsquelle 45 liefert über die Leitungen 44 eine Wechselspannung an den Induktor 42. Mittels elektromagnetischer Induktion wird in dem sich am Induktor vorbeibewegenden Preßband 7, 8 ebenfalls eine Wechselspannung induziert. Dadurch entstehen im Preßband 7, 8 Wirbelströme, die aufgrund dessen elektrischen Widerstandes das Preßband 7, 8 erwärmen. Die Frequenz der Wechselspannung hängt von der Gestalt des Induktors 42, des Preßbandes 7, 8, der zu erzeugenden Wärmemenge, usw. ab und wird vom Fachmann anhand der konkreten Daten bestimmt.

Falls die Druckplatte elektrisch isoliert im Pressengestell angebracht ist, kann auch diese als Induktor verwendet werden. Dann werden die Queroder Längsbohrungen 23 in der Druckplatte 11, 12 (siehe Fig. 2) zur Kühlung derselben von einer Kühlflüssigkeit durchflossen. Soll eine Erwärmung des Preßbandes 7, 8 bereits vor der Reaktionszone stattfinden, so kann der Induktor auch außerhalb der Druckplatte im Pressengestell an geeigneter Stelle angebracht sein. Selbstverständlich können die Prinzipien der induktiven Erwärmung sowie der Widerstandserwärmung in einer einzigen Doppelbandpresse 15 auch miteinander oder mit weiteren Vorrichtungen zur Übertragung von Wärme auf das Preßband (beispielsweise nach DE-OS 33 25 578) kombiniert werden. Es ist als besonderer Vorteil zu erwähnen, daß die Erzeugung der Wärme mittels elektromagnetischer Induktion im Preßband berührungslos erfolgt, während bei der Widerstandserwärmung nur die geringe, zur Stromübertragung benötigte Bürstenfläche das Preßband berührt. Dadurch erhält man gegenüber dem Stand der Technik sehr viel geringere Reibungskräfte, was eine geringere Antriebsleistung und einen geringern Verschleiß des Preßbandes bedeutet.

**Patentansprüche**

1. Doppelbandpresse (15) zur kontinuierlichen Herstellung von endlosen Werkstoffbahnen (9) mit einem starren Pressengestell, mit an Lagerbrücken (5, 6) des Pressengestells drehbar gelagerten Umlenktrommeln (1, 2, 3, 4) mit einem oberen (7) und einem unteren (8), über die Umlenktrommeln (1, 2, 3, 4) geführten, erwärmbaren, endlosen Preßband, wobei zwischen den einander gegenüberliegenden Außenseiten der Preßbänder (7, 8) die Reaktionszone (10) gebildet wird, in der die Werkstoffbahn (9) geführt und unter einem Flächendruck verpreßt wird und mit Druckkammern (11, 12), die in vertikaler Richtung von im Pressengestell befestigten Druckplatten (11, 12) und den Innenseiten der Preßbänder (7, 8), in horizontaler Richtung durch eine ringförmig in sich geschlossene Gleitflächendichtung (21) begrenzt sind und zur Erzeugung des Flächendrucks auf Preßbänder (7, 8) mit fluiden Druckmitteln beaufschlagbar sind,
**dadurch gekennzeichnet,**
daß auf die Preßbänder(7, 8) ein Gleich- oder Wechselstrom aufgebracht wird, der im Preßband (7, 8) fließt und aufgrund des elektrischen Widerstandes des Preßbandmaterials die Preßbänder (7, 8) mindestens in der Reaktionszone (10) erwärmt, von wo die Wärme an die Werkstoffbahn (9) übergeben wird, wobei
an den einlaufseitigen Umlenktrommeln (1, 4) und auslaufseitigen Umlenktrommeln (2, 3) Schleifringübertrager (24a,b) angebracht sind, welche jeweils über Leitungen (26, 27) mit dem Minuspol und dem Pluspol einer Gleichspannungsquelle (25) verbunden sind, so daß der Gleichstrom im Preßband (7, 8) von dem mit dem Pluspol verbundenen Schleifringübertragern (24b) zu den mit dem Minuspol verbundenen Schleifringübertragern (24a) fließt.

2.  Doppelbandpresse nach Anspruch 1, **dadurch gekennzeichnet,** daß das Preßband (7,8) aus Edelstahl besteht.

3.  Doppelbandpresse nach Anspruch 1 oder 2, **dadurch gekennzeichnet,** daß die einlaufseitigen Umlenktrommeln (1,4) beheizt sind.

4.  Doppelbandpresse nach Anspruch 3, **dadurch gekennzeichnet,** daß im Mantel (19) der Umlenktrommeln (1,4) Kanäle (18) zur Zirkulation für erwärmtes Thermoöl vorhanden sind.

5.  Doppelbandpresse nach einem der Ansprüche 1 bis 4, **dadurch gekennzeichnet,** daß die Schleifringübertrager (24a,b) am seitlichen Randbereich der Preßbänder (7,8) an den Umlenktrommeln (1,2,3,4) angebracht sind.

6.  Doppelbandpresse nach einem der Ansprüche 1 bis 5, **dadurch gekennzeichnet,** daß die Schleifringübertrager (24a,b) über die Breite der Preßbänder (7,8) an den Umlenktrommeln (1,2,3,4) angebracht sind.

7.  Doppelbandpresse nach einem der Ansprüche 1 bis 6, **dadurch gekennzeichnet,** daß die Schleifringübertrager (24a,b) aus einer isoliert am Pressengestell befestigten, bogenförmigen Gestellplatte (29) mit etwas größerem Radius als die Umlenktrommein (1,2,3,4) und Bürstenhalterungen (32) bestehen, in denen die mit den Polen der Gleichspannungsquelle (25) verbundenen, auf dem Preßband (7,8) schleifende Bürsten (36) sitzen.

8.  Doppelbandpresse nach Anspruch 7, **dadurch gekennzeichnet,** daß die bogenförmige Gestellplatte (29) mittels eines Trägers (31) isoliert an den Halterungen (30) für die Umlenktrommeln (1,2,3,4) befestigt ist.

9.  Doppelbandpresse nach Anspruch 7 oder 8, **dadurch gekennzeichnet,** daß die Bürste (36) in einer Bürstenfassung (33) sitzt, die Bürstenfassung (33) über ein Gestänge (35) in einem Einsatz (34) verschiebbar ist und der Einsatz (34) in der Bürstenhalterung (32) befestigt ist.

10. Doppelbandpresse nach einem der Ansprüche 7 bis 9, **dadurch gekennzeichnet,** daß die Bürstenhalterung (32) um einen Schwenkpunkt (37) in der bogenförmigen Gestellplatte (29) schwenkbar ist.

11. Doppelbandpresse nach einem der Ansprüche 7 bis 10, **dadurch gekennzeichnet,** daß auf der dem Preßband (7,8) abgewandten Seite der Bürstenhalterung (32) eine Kupferplatte (38) angebracht ist, zu der Leitungen (26,27) von der Gleichspannungsquelle (25) führen und weitere Kupferleitungen (39) von der Kupferplatte (38) zur Bürstenfassung (33) abgehen.

12. Doppelbandpresse nach einem der Ansprüche 7 bis 11**, dadurch gekennzeichnet,** daß die Bürsten (36) aus Graphit bestehen.

13. Doppelbandpresse nach einem der Ansprüche 7 bis 11, **dadurch gekennzeichnet,** daß die Bürsten (36) aus Bronze bestehen.

14. Doppelbandpresse nach einem der Ansprüche 7 bis 11, **dadurch gekennzeichnet,** daß die Bürsten (36) aus Kupfer bestehen.

15. Doppelbandpresse nach einem der Ansprüche 7 bis 14, **dadurch gekennzeichnet,** daß die Anzahl der Bürsten (36) in Abhängigkeit von der Höhe des zu übertragenden Gleichstromes gewählt wird.

16. Doppelbandpresse nach einem der Ansprüche 1 bis 15, **dadurch gekennzeichnet,** daß die Umlenktrommeln (1,2,3,4,) gummiert sind.

17. Doppelbandpresse (15) zur kontinuierlichen Herstellung von endlosen Werkstoffbahnen (9), mit einem starren Pressengestell, mit an Lagerbrücken (5, 6) des Pressengestells drehbar gelagerten Umlenktrommeln (1, 2, 3, 4) mit einem oberen (7) und einem unteren (8), über die Umlenktrommeln (1, 2, 3, 4) geführten, erwärmbaren, endlosen Preßband, wobei zwischen den einander gegenüberliegenden Außenseiten der Preßbänder (7, 8) die Reaktionszone (10) gebildet wird, in der die Werkstoffbahn (9) geführt und unter einem Flächendruck verpreßt wird und mit Druckkammern (11, 12), die in vertikaler Richtung von im Pressengestell befestigten Druckplatten (11, 12) und den Innenseiten der Preßbänder (7, 8), in horizontaler Richtung durch eine ringförmig in sich geschlossene Gleitflächendichtung (21) begrenzt sind und zur Erzeugung des Flächendrucks auf Preßbänder (7, 8) mit fluiden Druckmitteln beaufschlagbar sind,
**dadurch gekennzeichnet,**
daß ein Wechselstrom mittels elektromagnetischer Induktion auf das Preßband (7, 8) übertragen wird und dort über Wirbelstromverluste das Preßband (7, 8) erwärmt, wobei
in der Druckplatte (11, 12) eine Ausnehmung (41) vorhanden ist, in die ein Induktor (42) isoliert mittels Halterungen (43) an der Druckplatte (11, 12) befestigt ist und der Induktor (42) über Leitungen (44) mit den Polen einer Wechselspannungsquelle (45) verbunden ist.

18. Doppelbandpresse nach Anspruch 17, **dadurch gekennzeichnet,** daß die Ausnehmung (41) in der Druckplatte (11,12) rechteckig ist.

19. Doppelbandpresse nach Anspruch 18, **dadurch gekennzeichnet,** daß der Induktor (42) rechteckig ist.

20. Doppelbandpresse nach einem der Ansprüche 17 bis 19, **dadurch gekennzeichnet,** daß der Induktor (42) aus einer Kupferplatte besteht.

21. Doppelbandpresse nach Anspruch 20, **dadurch gekennzeichnet,** daß der Induktor (42) mit Bohrungen (46) für Kühlwasser versehen ist.

22. Doppelbandpresse nach einem der Ansprüche 1 bis 21, **dadurch gekennzeichnet,** daß in der Druckplatte (11,12) zur Beheizung Quer- und Längsbohrungen (23) vorhanden sind, in denen erwärmtes Thermoöl zirkuliert.

23. Doppelbandpresse nach Anspruch 22, **dadurch gekennzeichnet,** daß in der Druckplatte (11,12) Elemente aus gut wärmeleitendem Material unter Ausbildung eines guten Wärmeleitkontaktes angebracht sind und diese Elemente mit einer Fläche das Preßband (7,8) schleifend berühren.

**Claims**

1. Double belt press (15) for the continuous manufacture of endless material webs (9), comprising a rigid press frame, deflecting drums (1, 2, 3, 4) rotatably mounted at bearing supports (5, 6) of the press frame, an upper (7) and a lower (8) heatable endless press belt guided over the deflecting drums (1, 2, 3, 4), wherein the reaction zone (10) in which the material web (9) is guided and pressed by an areal pressure is formed between the mutually opposite outer sides of the press belts (7, 8), and pressure chambers (11, 12), which are bounded in vertical direction by the inner sides of the press belts (7, 8) and pressure plates (11, 12) fastened in the press frame and in horizontal direction by an annular sliding surface seal (21) closed in itself and which are loadable with fluid pressure means for the generation of the areal pressure on press belts (7, 8), characterised thereby that a direct or alternating current is applied to the press belts (7, 8), flows in the press belts (7, 8) and by reason of the electrical resistance of the press belt material heats the press belts (7, 8) at least in the reaction zone (10), from where the heat is transmitted to the material web (9), wherein mounted on the deflecting drums (1, 4) at the inlet side and deflecting drums (2, 3) at the outlet side are slip ring transmitters (24a, b), which are respectively connected by way of conductors (26, 27) with the negative pole and the positive pole of a direct voltage source (25) so that the direct current in the press belt (7, 8) flows from the slip ring transmitter (24b) connected with the positive pole to the slip ring transmitter (24a) connected with the negative pole.

2. Double belt press according to claim 1, characterised thereby that the press belt (7, 8) consists of fine steel.

3. Double belt press according to claim 1 or 2, characterised thereby that the deflecting drums (1, 4) at the inlet side are heated.

4. Double belt press according to claim 3, characterised thereby that channels (18) for the circulation for heated thermo oil are present in the shell (19) of the deflecting drums (1, 4).

5. Double belt press according to one of the claims 1 to 4, characterised thereby that the slip ring transmitters (24a, b) are mounted on the deflecting drums (1, 2, 3, 4) at lateral edge regions of the press belts (7, 8).

6. Double belt press according to one of the claims 1 to 5, characterised thereby that the slip ring transmitters (24a, b) are mounted on the deflecting drums (1, 2, 3, 4) over the width of the press belts (7, 8).

7. Double belt press according to one of the claims 1 to 6, characterised thereby that the slip ring transmitters (24a, b) consist of a curved frame plate (29), which is fastened insulated to the press frame and has a radius somewhat larger than the deflecting drums (1, 2, 3, 4), and of brush holders (32), in which the brushes (36), which are connected with the poles of the direct voltage source (25) and which wipe on the press belt (7, 8), are seated.

8. Double belt press according to claim 7; characterised thereby that the curved frame plate (29) is fastened insulated to the holders (30) for the deflecting drums (1, 2, 3, 4) by means of a support (31).

9. Double belt press according to claim 7 or 8, characterised thereby that the brush (36) is seated in a brush mount (33), the brush mount (33) is displaceable in an insert (34) by way of a rod (35) and the insert (34) is fastened in the brush holder (32).

10. Double belt press according to claims 7 to 9, characterised thereby that the brush holder (32) is pivotable in the curved frame plate (29) about a pivot point (37).

11. Double belt press according to one of the claims 7 to 10, characterised thereby that a copper plate (38), to which conductors (26, 27) from the direct voltage source (25) lead and further copper conductors (39) issue from the copper plate (38) to the brush mount (33), is mounted on the side of the brush holder (32) facing away from the press belt (7, 8).

12. Double belt press according to one of the claims 7 to 11, characterised thereby that the brushes (36) consist of graphite.

13. Double belt press according to one of the claims 7 to 11, characterised thereby that the brushes (36) consist of bronze.

14. Double belt press according to one of the claims 7 to 11, characterised thereby that the brushes (36) consist of copper.

15. Double belt press according to one of the claims 7 to 14, characterised thereby that the number of the brushes (36) is selected in dependence on the height of the direct current to be transferred.

16. Double belt press according to one of the claims 1 to 15, characterised thereby that the deflecting drums (1, 2, 3, 4) are rubberised.

17. Double belt press (15) for the continuous manufacture of endless material webs (9), comprising a rigid press frame, deflecting drums (1, 2, 3, 4) rotatably mounted at bearing supports (5, 6) of the press frame, an upper (7) and a lower (8) heatable endless press belt guided over the deflecting drums (1, 2, 3, 4), wherein the reaction zone (10) in which the material web (9) is guided and pressed by an areal pressure is formed between the mutually opposite outer sides of the press belts (7, 8), and pressure chambers (11, 12), which are bounded in vertical direction by the inner sides of the press belts (7, 8) and pressure plates (11, 12) fastened in the press frame and in horizontal direction by an annular sliding surface seal (21) closed in itself and which are loadable with fluid pressure means for the generation of the areal pressure on press belts (7, 8), characterised thereby that an alternating current is transmitted to the press belt (7, 8) by means of electromagnetic induction and there heats the press belt (7, 8) by eddy-current loss, wherein a recess (41), in which an inductor (42) is fastened insulated to the pressure plate (11, 12) by means of holders (43), is present in the pressure plate (11, 12) and the inductor (42) is connected by way of conductors (44) with the poles of an alternating voltage source (45).

18. Double belt press according to claim 17, characterised thereby that the recess (41) in the pressure plate (11, 12) is rectangular.

19. Double belt press according to claim 18, characterised thereby that the inductor (42) is rectangular.

20. Double belt press according to one of the claims 17 to 19, characterised thereby that the inductor (42) consists of a copper plate.

21. Double belt press according to claim 20, characterised thereby that the inductor (42) is provided with bores (46) for cooling water.

22. Double belt press according to one of the claims 1 to 21, characterised thereby that transverse and longitudinal bores (23), in which heated thermo oil circulates, are present for the heating in the pressure plate (11, 12).

23. Double belt press according to claim 22, characterised thereby that elements of thermally well-conducting material are mounted in the pressure plate (11, 12) with formation of a good thermally conductive contact and these elements wipingly contact a surface of the press belt (7, 8).

**Revendications**

1. Presse à double bande (15) pour la fabrication en continu de bandes de matière sans fin (9) avec un chassis rigide de pressage, avec des tambours de renvoi (1, 2, 3, 4) montés de façon à pouvoir tourner sur des consoles de paliers (5, 6) du chassis de pressage, avec une bande de pressage sans fin supérieure (7) et une inférieure (8), menée sur les tambours de renvoi (1, 2, 3, 4), pouvant être chauffée, presse dans laquelle entre les côtés extérieurs se faisant vis-à-vis l'un l'autre des bandes de pressage (7, 8) est formée la zone de réaction (10) dans laquelle la bande de matière (9) est guidée et est comprimée sous une pression de surface et avec des chambres de pression (11, 12) qui sont limitées dans le sens vertical par des plaques de pression (11, 12) fixées dans le chassis de pressage et par les côtés intérieurs des bandes de pressage (7, 8) dans le sens horizontal par un joint à faces frottantes, fermé sur lui-même, de forme annulaire, (21) et peuvent être actionnés par des agents fluides sous pression pour produire la pression de surface sur les bandes de pressage (7, 8), presse à double bande caractérisée en ce que sur les bandes de pressage (7, 8) on applique un courant continu ou alternatif, qui passe dans la bande de pressage (7, 8) et du fait de la résistance électrique de la matière de la bande de pressage chauffe les bandes de pressage (7, 8) au moins dans la zone de réaction (10), d'où la chaleur est transmise à la bande de matière (9), presse dans laquelle sont disposés sur les tambours de renvoi situés du côté de la sortie (2, 3) des transmetteurs à bague collectrice (24 a,b), qui sont chacun reliés par des conducteurs (26, 27) au pôle moins et au pôle plus d'une source de tension continue (25), de telle sorte que le courant continu passe dans la bande de pressage (7, 8) des transmetteurs (24b) à bague collectrice reliés au pôle plus aux transmetteurs (24a) à bagues collectrices reliés au pôle moins.

2. Presse à double bande selon la revendication 1, caractérisée en ce que la bande de pressage (7, 8) est en acier spécial.

3. Presse à double bande selon la revendication 1 ou 2, caractérisée en ce que les tambours de renvoi situés du côté de l'introduction (1, 4) sont chauffés.

4. Presse à double bande, selon la revendication 3, caractérisée en ce que, dans l'enveloppe (1a) des tambours de renvoi (1, 4) il y a des canaux (18) pour la circulation d'huile thermique chauffée.

5. Presse à double bande selon l'une des revendications 1 à 4, caractérisée en ce que les transmetteurs à bague collectrice (24 a,b) sont disposés sur la zone latérale de bordure des bandes de pressage (7, 8 sur les tambours de renvoi (1, 2, 3, 4).

6. Presse à double bande selon l'une des revendications 1 à 5, caractérisée en ce que les transmetteurs à bague collectrice (24a, b) sont disposées sur la largeur des bandes de pressage (7, 8) sur les tambours de renvoi (1, 2, 3, 4).

7. Presse à double bande selon l'une des revendications 1 à 6, caractérisée en ce que le transmetteur à bague collectrice (24a,b) consiste en une plaque de chassis (29) fixée de façon isolée sur le chassis de pressage, de forme arquée avec un rayon un peu plus grand que celui des tambours de renvoi (1, 2, 3, 4) et des supports de balai (32), dans lesquels se trouvent les balais (36) reliés aux pôles de la source de tension continue (25), frottant sur la bande de pressage (7, 8).

8. Presse à double bande selon la revendication 7, caractérisée en ce que la plaque de chassis (29) de forme arquée est fixée au moyen d'un support (31) de façon isolée sur des fixations (30) des tambours de renvoi (1, 2, 3, 4).

9. Presse à double bande selon la revendication 7 ou 8, caractérisée en ce que les balais (36) se trouve dans une monture de balai (33), la monture de balai (33) peut être déplacée au moyen d'une tige (35) dans un insert (34) et l'insert (34) est fixé sur le support de balai (32).

10. Presse à double bande selon l'une des revendications 7 à 9, caractérisée en ce que le support de balai (32) peut osciller autour d'un point de pivotement (37) dans la plaque de chassis (29) de forme arquée.

11. Presse à double bande selon l'une des revendications 7 à 10, caractérisée en ce que, sur le côté du support de balai (32) tourné à l'opposé de la bande de pressage (7, 8) est disposée une plaque de cuivre (38), à laquelle arrivent des conducteurs (26, 27) venant de la source de tension continue (25) et d'autres conducteurs de cuivre (39) partent de la plaque de cuivre (38) vers la monture de balai (33).

12. Presse à double bande selon l'une des revendications 7 à 11, caractérisée en ce que les balais (36) sont en graphite.

13. Presse à double bande selon l'une des revendications 7 à 11, caractérisée en ce que les balais (36) sont en bronze.

14. Presse à double bande selon l'une des revendications 7 à 11, caractérisée en ce que les balais (36) sont en cuivre.

15. Presse à double bande selon l'une des revendications 7 à 14, caractérisée en ce que le nombre des balais (36) est choisi en fonction de l'importance du courant continu à transférer.

16. Presse à double bande selon l'une des revendications 1 à 15, caractérisée en ce que les tambours de renvoi (1, 2, 3, 4) sont caoutchoutés.

17. Presse à double bande (15) pour la fabrication en continu de bandes de matière sans fin (9) avec un chassis rigide de pressage, avec des tambours de renvoi (1, 2, 3, 4) montés de façon à pouvoir tourner sur des consoles de paliers (5, 6) du chassis de pressage, avec une bande de pressage sans fin supérieure (7) et une inférieure (8), menée sur les tambours de renvoi (1, 2, 3, 4) pouvant être chauffée, presse dans laquelle entre les cotés extérieurs se faisant vis-à-vis l'un l'autre des bandes de pressage (7, 8) est formée la zone de réaction (10) dans laquelle la bande de matière (9) est guidée et est comprimée sous une pression de surface et avec des chambres de pression (11, 12) qui sont limitées dans le sens vertical par des plaques de pression (11, 12) fixées dans le chassis de pressage et par les cotés intérieurs des bandes de pressage (7, 8) dans le sens horizontal par un joint à faces frottantes, fermé sur lui-même, de forme annulaire (21) et peuvent être actionnés par des agents fluides sous pression pour produire la pression de surface sur les bandes de pressage (7, 8), presse à double bande caractérisée en ce que l'on transmet à la bande de pressage (7, 8) un courant alternatif au moyen d'une induction électromagnétique et l'on chauffe la bande de pressage (7, 8) au moyen des pertes produites par des courants de Foucault, un évidement (41) existant dans la plaque de pression (11, 12), évidement dans lequel est fixé un inducteur (42) isolé au moyen de fixations (43) sur la plaque de pression (11, 12) et l'inducteur (42) est relié par des conducteurs (44) aux pôles d'une source de tension alternative (45).

18. Presse à double bande selon la revendication 17, caractérisée en ce que l'évidement (41) dans la plaque de pression (11, 12) est rectangulaire.

19. Presse à double bande selon la revendication 18, caractérisée en ce que l'inducteur (42) est rectangulaire.

20. Presse à double bande selon l'une des revendications 17 à 19, caractérisée en ce que l'inducteur (42) consiste en une plaque de cuivre.

21. Presse à double bande selon la revendication 20, caractérisée en ce que l'inducteur (42) est pourvu d'alésages (46) pour de l'eau de refroidissement.

22. Presse à double bande selon les revendications 1 a 21, caractérisée en ce que dans la plaque de pression (11, 12) il est prévu pour le chauffage des alésages transversaux et longitudinaux (23), dans lesquels circule de l'huile thermique chauffée.

23. Presse à double bande selon la revendication 22, caractérisée en ce que dans la plaque de pressage (11, 12) sont disposés des éléments en une matière bonne conductrice de la chaleur en formant un bon contact de conduction de la chaleur et ces éléments sont en contact par une surface avec la bande de pressage (7,

8) par frottement.

Fig. 1

Fig. 2

Fig. 3

EP 0 291 756 B1

Fig. 4

Fig. 5

Fig. 6